# EUROPEAN PATENT APPLICATION

(11) **EP 4 542 394 A1**
(43) Date of publication of application: **23.04.2025**
(21) Application number: 24207210.6
(22) Date of filing: 17.10.2024
(51) Int. Cl.: G06F 9/50, H04L 41/0806, H04L 41/0895, H04L 67/1001

(54) **PROVISIONING CLOUD-AGNOSTIC RESOURCE INSTANCES BY SHARING CLOUD RESOURCES**

(30) Priority: 20.10.2023 US 202318382190
(71) Applicant: VMware LLC, Palo Alto, CA 94304 (US)
(72) Inventor: Peev, Plamen Veselinov, 1766 Sofia (BG); Dzhigarov, Marin, 1766 Sofia (BG); Raikov, Ventsyslav, 1766 Sofia (BG)
(74) Representative: Dilg, Haeusler, Schindelmann Patentanwaltsgesellschaft mbH

(57) **Abstract**

Provisioning cloud-agnostic resource instances by sharing cloud resources is described herein. One example method includes creating a blueprint using a development platform, wherein the blueprint includes a definition of a resource, and wherein provisioning the resource includes provisioning a first cloud resource and a second cloud resource provided by a cloud provider, provisioning a first instance of the resource of the blueprint by provisioning a first instance of the first cloud resource and a first instance of the second cloud resource, and provisioning a second instance of the resource of the blueprint, wherein provisioning the second instance of the resource includes provisioning a second instance of the first cloud resource and sharing the first instance of the second cloud resource.

## Description

### BACKGROUND

A data center is a facility that houses servers, data storage devices, and/or other associated components such as backup power supplies, redundant data communications connections, environmental controls such as air conditioning and/or fire suppression, and/or various security systems. A data center may be maintained by an information technology (IT) service provider. An enterprise may utilize data storage and/or data processing services from the provider in order to run applications that handle the enterprises' core business and operational data. The applications may be proprietary and used exclusively by the enterprise or made available through a network for anyone to access and use.

Virtual computing instances (VCIs), such as virtual machines and containers, have been introduced to lower data center capital investment in facilities and operational expenses and reduce energy consumption. A VCI is a software implementation of a computer that executes application software analogously to a physical computer. VCIs have the advantage of not being bound to physical resources, which allows VCIs to be moved around and scaled to meet changing demands of an enterprise without affecting the use of the enterprise's applications. In a software-defined data center, storage resources may be allocated to VCIs in various ways, such as through network attached storage (NAS), a storage area network (SAN) such as fiber channel and/or Internet small computer system interface (iSCSI), a virtual SAN, and/or raw device mappings, among others.

### BRIEF DESCRIPTION OF THE DRAWINGS

Figure 1 is a diagram of a host and a system for provisioning cloud-agnostic resource instances by sharing cloud resources according to one or more embodiments of the present disclosure.
Figure 2 is a deployment associated with provisioning cloud-agnostic resource instances by sharing cloud resources according to one or more embodiments of the present disclosure.
Figure 3 illustrates a system for provisioning cloud-agnostic resource instances by sharing cloud resources according to one or more embodiments of the present disclosure.
Figure 4 is a diagram of a machine for provisioning cloud-agnostic resource instances by sharing cloud resources according to one or more embodiments of the present disclosure.

### DETAILED DESCRIPTION

As referred to herein, a virtual computing instance (VCI) covers a range of computing functionality. VCIs may include non-virtualized physical hosts, virtual machines (VMs), and/or containers. A VM refers generally to an isolated end user space instance, which can be executed within a virtualized environment. Other technologies aside from hardware virtualization that can provide isolated end user space instances may also be referred to as VCIs. The term "VCI" covers these examples and combinations of different types of VCIs, among others. VMs, in some embodiments, operate with their own guest operating systems on a host using resources of the host virtualized by virtualization software (e.g., a hypervisor, virtual machine monitor, etc.).

Multiple VCIs can be configured to be in communication with each other in an SDDC. In such a system, information can be propagated from a client (e.g., an end user) to at least one of the VCIs in the system, between VCIs in the system, and/or between at least one of the VCIs in the system and a server. SDDCs are dynamic in nature. For example, VCIs and/or various application services, may be created, used, moved, or destroyed within the SDDC. When VCIs are created, various processes and/or services start running and consuming resources. As used herein, "resources" are physical or virtual components that have a finite availability within a computer or SDDC. For example, resources include processing resources, memory resources, electrical power, and/or input/output resources.

While the specification refers generally to VCIs, the examples given could be any type of data compute node, including physical hosts, VCIs, non-VCI containers, and hypervisor kernel network interface modules. Embodiments of the present disclosure can include combinations of different types of data compute nodes.

A development platform can be used to configure and/or provision resources in a virtualized environment. One example of such a development platform is VMware's Aria Automation, which may also be known as VMware's vRealize Automation (sometimes referred to herein as "vRA"). vRA is a cloud management layer that sits on top of one or more clouds (e.g., different clouds). It can provision complex deployments and offer governance and management of these workloads and the resources in the cloud. A development platform in accordance with the present disclosure can be designed to automate multiple clouds with secure, self-service provisioning. The particular example of vRA is described herein, though it is noted that embodiments of the present disclosure are not so limited.

Clients may desire to provision an infrastructure from a particular cloud provider source (e.g., a link such as https://cloud.google.com/solutions/sap/docs/netweaver-ha-config-rhel#configure_the_failover_support). Unfortunately, the cloud agnostic nature of the load balancers in vRA means there must be only one model of load balancer no matter if it is going to be deployed to GCP, AWS, Azure or any other cloud provider, which means that the model is translated to the cloud specific resources available in each cloud. Since there is not a one-to-one mapping between what exists in vRA and what is available in GCP, the runtime may be used to fulfil the most common use case, which is to create unique set of health check, firewall rule, instance groups, backend service and forwarding rule for each load balancer.

Embodiments of the present disclosure can provision more resources than what is currently possible to provision with a single load balancer. Additionally, embodiments herein can express the complex relationships between the resources on the GCP side. For instance, embodiments herein deploy two cloud agnostic load balancers in order to create the required resources in GCP. In addition, embodiments herein provide a solution to an issue presented, which is that there will be more instance groups than needed.

In order to address this issue in a cloud-agnostic model, embodiments of the present disclosure introduce a new optional custom property, referred to herein as "useInstanceGroupsFrom." This property includes the name of a load balancer that shares its instance groups with the rest of the load balancers and is specified on every load balancer except the first one. The concrete GCP adapter implementation is modified not to create new instance groups if the property is specified. Instead, it takes instance groups specified by the property load balancer. In this way, for each availability zone, there will be only one instance group that contains all required by the load balancer VCI instances. This property solves the problem with the count of the resources and the relationships between them. As a result, embodiments herein can constrain all load balancers to depend on the load balancer that shares the instance groups. In this way the instance groups will be available when the other load balancers are created.

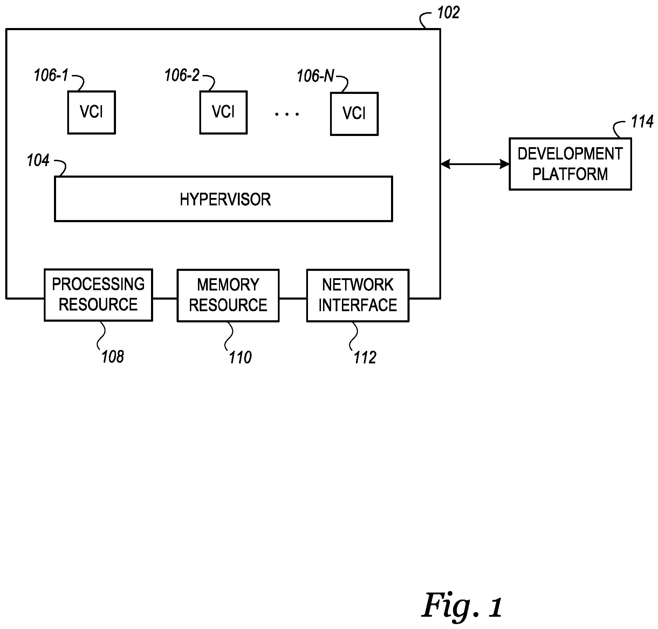

Figure 1 is a diagram of a host and a system for provisioning cloud-agnostic resource instances by sharing cloud resources according to one or more embodiments of the present disclosure. The host 102 can be provisioned with processing resource(s) 108 (e.g., one or more processors), memory resource(s) 110 (e.g., one or more main memory devices and/or storage memory devices), and/or a network interface 112. The host 102 can be included in a software defined data center. A software defined data center can extend virtualization concepts such as abstraction, pooling, and automation to data center resources and services to provide information technology as a service (ITaaS). In a software defined data center, infrastructure, such as networking, processing, and security, can be virtualized and delivered as a service. A software defined data center can include software defined networking and/or software defined storage. In some embodiments, components of a software defined data center can be provisioned, operated, and/or managed through an application programming interface (API).

The host 102 can incorporate a hypervisor 104 that can execute a number of VCIs 106-1, 106-2,..., 106-N (referred to generally herein as "VCIs 106"). The VCIs can be provisioned with processing resources 108 and/or memory resources 110 and can communicate via the network interface 112. The processing resources 108 and the memory resources 110 provisioned to the VCIs 106 can be local and/or remote to the host 102 (e.g., the VCIs 106 can be ultimately executed by hardware that may not be physically tied to the VCIs 106). For example, in a software defined data center, the VCIs 106 can be provisioned with resources that are generally available to the software defined data center and are not tied to any particular hardware device. By way of example, the memory resources 110 can include volatile and/or non-volatile memory available to the VCIs 106. The VCIs 106 can be moved to different hosts (not specifically illustrated), such that a different hypervisor manages the VCIs 106. In some embodiments, the host 102 can be connected to (e.g., in communication with) a development platform 114. Though not shown in Figure, 1, The development platform can be connected to one or more clouds via one or more cloud providers (e.g., GCP, etc.).

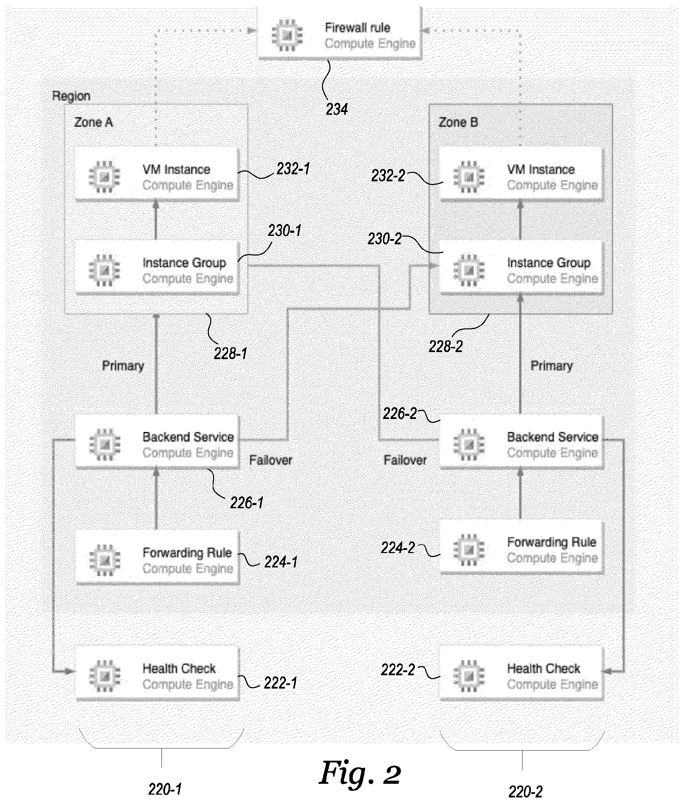

Figure 2 is a deployment associated with provisioning cloud-agnostic resource instances by sharing cloud resources according to one or more embodiments of the present disclosure. The deployment illustrated in Figure 2 is an example deployment and embodiments of the present disclosure are not limited to the particular resources illustrated in Figure 2.

As shown, the example deployment illustrated in Figure 2 includes a first load balancer 220-1 and a second load balancer 220-2. The load balancers 220 are examples of resources that have a single definition in a development platform but the implementation of which involves the deployment of multiple resources in the cloud. For instance, in vRA, a single load balancer resource instance is provisioned by a plurality of cloud resources. For the first load balancer, these cloud resources include a first health check 222-1, a first forwarding rule 224-1, a first backend service 226-1, a first instance group 230-1 a first VCI 232-1, and a firewall rule 234. The first VCI 232-1 and the first instance group 230-1 can be included in a first zone (e.g., availability zone) 228-1.

A blueprint associated with the first load balancer 220-1 (and the second load balancer 220-2) can include:

```
 formatVersion: 1
 inputs: { }
 resources:
 Cloud_LoadBalancer_1:
  type: Cloud.LoadBalancer
  properties:
   routes:
    - healthCheckConfiguration:
      healthyThreshold: 2
      unhealthyThreshold: 2
      timeoutSeconds: 10
      intervalSeconds: 10
      port: 65000
      protocol: TCP
     protocol: TCP
   network: ${resource.Cloud_Network_1.id}
   instances:
    - ${resource.Cloud_GCP_Machine_1.id}
    - ${resource.Cloud_GCP_Machine_2.id}
   intemetFacing: false
   failoverInstanceGroupsByInstanceNames:
    - ${resource.Cloud_GCP_Machine_2.resourceName}
 Cloud_LoadBalancer_2:
  type: Cloud.LoadBalancer
  properties:
   routes:
    - healthCheckConfiguration:
      healthyThreshold: 2
      unhealthyThreshold: 2
      timeoutSeconds: 10
      intervalSeconds: 10
      port: 65000
      protocol: TCP
     protocol: TCP
   network: ${resource.Cloud_Network_1.id}
   instances: []
   internetFacing: false
   useInstanceGroupsFrom: ${resource.Cloud_LoadBalancer_1.resourceName}
   failoverInstanceGroupsByInstanceNames:
    - $ {resource.Cloud_GCP_Machine_1.resourceName}
 Cloud_GCP_Machine_2:
  type: Cloud.GCP.Machine
  properties:
   image: image
   flavor: flavor
   networks:
    - network: ${resource.Cloud_Network_1.id}
   constraints:
    - tag: zone-b
 Cloud_GCP_Machine_1:
  type: Cloud.GCP.Machine
  properties:
   image: image
   flavor: flavor
   networks:
    - network: ${resource.Cloud_Network_1.id}
   constraints:
    - tag: zone-a
 Cloud_Network_1:
  type: Cloud.Network
  properties:
   networkType: existing
   constraints:
    - tag: default
```

As shown in the blueprint, the second load balancer 220-2 includes a custom property "useInstanceGroupsFrom." Accordingly, any instance groups of the second load balancer 220-2 are not created. Rather, they are shared with the first instance groups 230-1 of the first load balancer. Accordingly, the instance group 230-2 of the second load balancer 220-2 is the first instance group 230-1. Embodiments herein can include specifying, in the blueprint, that a second instance of a resource (e.g., load balancer 220-2) is to be provisioned by sharing the first instance of a cloud resource (e.g., instance group 230-1). It is noted that while the specific example of sharing an instance group is described herein, embodiments of the present disclosure can specify any instances of other types of cloud resources that are to be shared in order to allow a resource in development platform to be deployed properly.

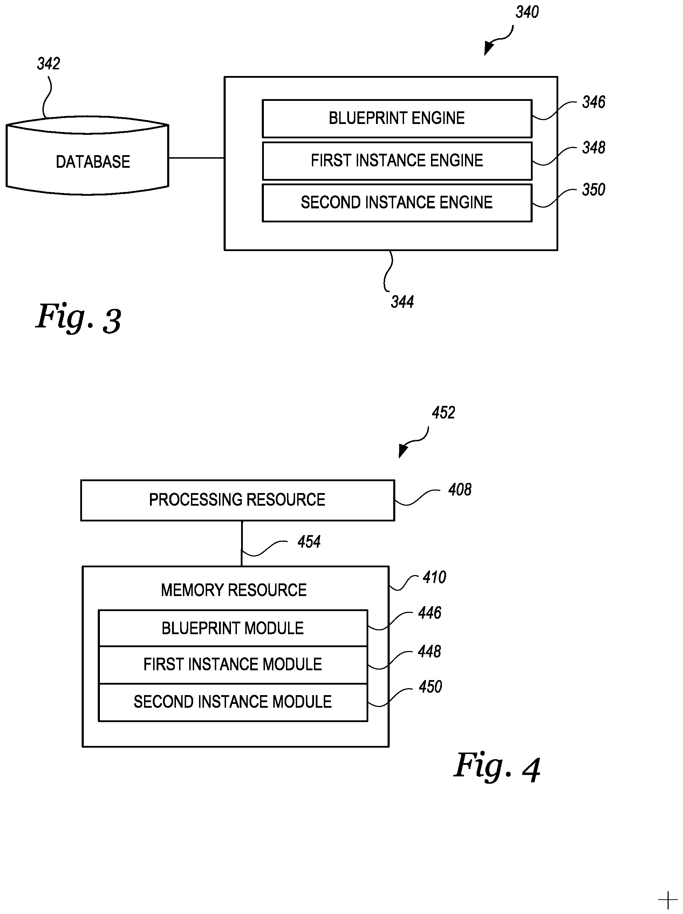

Figure 3 illustrates a system 340 for provisioning cloud-agnostic resource instances by sharing cloud resources according to one or more embodiments of the present disclosure. The system 340 can include a database 342, a subsystem 344, and/or a number of engines, for example a blueprint engine 346, a first instance engine 348, and/or a second instance engine 350, and can be in communication with the database 342 via a communication link. The system 340 can include additional or fewer engines than illustrated to perform the various functions described herein. The system 340 can represent program instructions and/or hardware of a machine (e.g., machine 452 as referenced in Figure 4, etc.). As used herein, an "engine" can include program instructions and/or hardware, but at least includes hardware. Hardware is a physical component of a machine that enables it to perform a function. Examples of hardware can include a processing resource, a memory resource, a logic gate, etc.

The number of engines can include a combination of hardware and program instructions that is configured to perform a number of functions described herein. The program instructions (e.g., software, firmware, etc.) can be stored in a memory resource (e.g., machine-readable medium) as well as hard-wired program (e.g., logic). Hard-wired program instructions (e.g., logic) can be considered as both program instructions and hardware.

In some embodiments, the blueprint engine 346 can include a combination of hardware and program instructions that is configured to create a blueprint using a development platform, wherein the blueprint includes a definition of a resource, and wherein provisioning the resource includes provisioning a first cloud resource and a second cloud resource provided by a cloud provider. In some embodiments, the first instance engine 348 can include a combination of hardware and program instructions that is configured to provision a first instance of the resource of the blueprint by provisioning a first instance of the first cloud resource and a first instance of the second cloud resource. In some embodiments, the second instance engine 350 can include a combination of hardware and program instructions that is configured to provision a second instance of the resource of the blueprint, wherein provisioning the second instance of the resource includes provisioning a second instance of the first cloud resource and sharing the first instance of the second cloud resource.

Figure 4 is a diagram of a machine 452 for provisioning cloud-agnostic resource instances by sharing cloud resources according to one or more embodiments of the present disclosure. The machine 452 can utilize software, hardware, firmware, and/or logic to perform a number of functions. The machine 452 can be a combination of hardware and program instructions configured to perform a number of functions (e.g., actions). The hardware, for example, can include a number of processing resources 408 and a number of memory resources 410, such as a machine-readable medium (MRM) or other memory resources 410. The memory resources 410 can be internal and/or external to the machine 452 (e.g., the machine 452 can include internal memory resources and have access to external memory resources). In some embodiments, the machine 452 can be a virtual computing instance (VCI) or other computing device. The term "VCI" covers a range of computing functionality. The term "virtual machine" (VM) refers generally to an isolated user space instance, which can be executed within a virtualized environment. Other technologies aside from hardware virtualization can provide isolated user space instances, also referred to as data compute nodes. Data compute nodes may include non-virtualized physical hosts, VMs, containers that run on top of a host operating system without a hypervisor or separate operating system, and/or hypervisor kernel network interface modules, among others. Hypervisor kernel network interface modules are non-VM data compute nodes that include a network stack with a hypervisor kernel network interface and receive/transmit threads. The term "VCI" covers these examples and combinations of different types of data compute nodes, among others.

The program instructions (e.g., machine-readable instructions (MRI)) can include instructions stored on the MRM to implement a particular function (e.g., an action such as provisioning). The set of MRI can be executable by one or more of the processing resources 408. The memory resources 410 can be coupled to the machine 452 in a wired and/or wireless manner. For example, the memory resources 410 can be an internal memory, a portable memory, a portable disk, and/or a memory associated with another resource, e.g., enabling MRI to be transferred and/or executed across a network such as the Internet. As used herein, a "module" can include program instructions and/or hardware, but at least includes program instructions.

Memory resources 410 can be non-transitory and can include volatile and/or non-volatile memory. Volatile memory can include memory that depends upon power to store information, such as various types of dynamic random access memory (DRAM) among others. Non-volatile memory can include memory that does not depend upon power to store information. Examples of non-volatile memory can include solid state media such as flash memory, electrically erasable programmable read-only memory (EEPROM), phase change random access memory (PCRAM), magnetic memory, optical memory, and/or a solid state drive (SSD), etc., as well as other types of machine-readable media.

The processing resources 408 can be coupled to the memory resources 410 via a communication path 454. The communication path 454 can be local or remote to the machine 452. Examples of a local communication path 454 can include an electronic bus internal to a machine, where the memory resources 410 are in communication with the processing resources 480 via the electronic bus. Examples of such electronic buses can include Industry Standard Architecture (ISA), Peripheral Component Interconnect (PCI), Advanced Technology Attachment (ATA), Small Computer System Interface (SCSI), Universal Serial Bus (USB), among other types of electronic buses and variants thereof. The communication path 454 can be such that the memory resources 410 are remote from the processing resources 408, such as in a network connection between the memory resources 410 and the processing resources 408. That is, the communication path 454 can be a network connection. Examples of such a network connection can include a local area network (LAN), wide area network (WAN), personal area network (PAN), and the Internet, among others.

As shown in Figure 4, the MRI stored in the memory resources 410 can be segmented into a number of modules 446, 448, 450 that when executed by the processing resources 408 can perform a number of functions. As used herein a module includes a set of instructions included to perform a particular task or action. The number of modules 446, 448, 450 can be sub-modules of other modules. For example, the second instance module 450 can be a sub-module of the first instance module 448 and/or can be contained within a single module. Furthermore, the number of modules 446, 448, 450 can comprise individual modules separate and distinct from one another. Examples are not limited to the specific modules 446, 448, 450 illustrated in Figure 4.

One or more of the number of modules 446, 448, 450 can include program instructions and/or a combination of hardware and program instructions that, when executed by a processing resource 408, can function as a corresponding engine as described with respect to Figure 3. For example, the blueprint module 446 can include program instructions and/or a combination of hardware and program instructions that, when executed by a processing resource 408, can function as the blueprint engine 346.

For example, the machine 452 can include a blueprint module 446, which can include instructions to create a blueprint using a development platform, wherein the blueprint includes a definition of a resource, and wherein provisioning the resource includes provisioning a first cloud resource and a second cloud resource provided by a cloud provider. For example, the machine 452 can include a first instance module 448, which can include instructions to provision a first instance of the resource of the blueprint by provisioning a first instance of the first cloud resource and a first instance of the second cloud resource. For example, the machine 452 can include a second instance module 450, which can include instructions to provision a second instance of the resource of the blueprint, wherein provisioning the second instance of the resource includes provisioning a second instance of the first cloud resource and sharing the first instance of the second cloud resource.

The present disclosure is not limited to particular devices or methods, which may vary. The terminology used herein is for the purpose of describing particular embodiments, and is not intended to be limiting. As used herein, the singular forms "a", "an", and "the" include singular and plural referents unless the content clearly dictates otherwise. Furthermore, the words "can" and "may" are used throughout this application in a permissive sense (i.e., having the potential to, being able to), not in a mandatory sense (i.e., must). The term "include," and derivations thereof, mean "including, but not limited to."

The figures herein follow a numbering convention in which the first digit or digits correspond to the drawing figure number and the remaining digits identify an element or component in the drawing. Similar elements or components between different figures may be identified by the use of similar digits. For example, 108 may reference element "08" in Figure 1, and a similar element may be referenced as 408 in Figure 4. A group or plurality of similar elements or components may generally be referred to herein with a single element number. For example, a plurality of reference elements 104-1, 104-2, ..., 104-N may be referred to generally as 104. As will be appreciated, elements shown in the various embodiments herein can be added, exchanged, and/or eliminated so as to provide a number of additional embodiments of the present disclosure. In addition, as will be appreciated, the proportion and the relative scale of the elements provided in the figures are intended to illustrate certain embodiments of the present invention, and should not be taken in a limiting sense.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. Various advantages of the present disclosure have been described herein, but embodiments may provide some, all, or none of such advantages, or may provide other advantages.

In the foregoing Detailed Description, some features are grouped together in a single embodiment for the purpose of streamlining the disclosure. This method of disclosure is not to be interpreted as reflecting an intention that the disclosed embodiments of the present disclosure have to use more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A method, comprising:
creating a blueprint using a development platform, wherein the blueprint includes a definition of a resource, and wherein provisioning the resource includes provisioning a first cloud resource and a second cloud resource provided by a cloud provider;
provisioning a first instance of the resource of the blueprint by provisioning a first instance of the first cloud resource and a first instance of the second cloud resource; and
provisioning a second instance of the resource of the blueprint, wherein provisioning the second instance of the resource includes provisioning a second instance of the first cloud resource and sharing the first instance of the second cloud resource.

2. The method of claim 1, wherein
the resource is a load balancer.

3. The method of claim 2, wherein
provisioning the load balancer includes provisioning, by the cloud provider:
a health check;
a firewall rule;
an instance group;
a backend service; and
a forwarding rule.

4. The method of claim 2 or 3, wherein
the first cloud resource is a forwarding rule of the load balancer and wherein the second cloud resource is an instance group of the load balancer.

5. The method of any one of the claims 1 to 4, wherein
the method includes specifying, in the blueprint, that the second instance of the resource is to be provisioned by sharing the first instance of the second cloud resource.

6. The method of any one of the claims 1 to 5, wherein
the resource is cloud agnostic.

7. The method of any one of the claims 1 to 6, wherein the method includes:
provisioning a third instance of the resource of the blueprint, wherein provisioning the third instance of the resource includes provisioning a third instance of the first cloud resource and sharing the first instance of the second cloud resource.

8. A non-transitory machine-readable medium having instructions stored thereon which, when executed by a processor, cause the processor to control and/or carry out a method as set forth in any one of the preceding method claims.

9. A system, comprising:
a blueprint engine configured to create a blueprint using a development platform, wherein the blueprint includes a definition of a resource, and wherein provisioning the resource includes provisioning a first cloud resource and a second cloud resource provided by a cloud provider;
a first instance engine configured to provision a first instance of the resource of the blueprint by provisioning a first instance of the first cloud resource and a first instance of the second cloud resource; and
a second instance engine configured to provision a second instance of the resource of the blueprint, wherein provisioning the second instance of the resource includes provisioning a second instance of the first cloud resource and sharing the first instance of the second cloud resource.

10. The system of claim 9, wherein
the resource is a load balancer.

11. The system of claim 10, wherein
provisioning the load balancer includes provisioning, by the cloud provider:
a health check;
a firewall rule;
an instance group;
a backend service; and
a forwarding rule.

12. The system of claim 10 or 11, wherein
the first cloud resource is a forwarding rule of the load balancer and wherein the second cloud resource is an instance group of the load balancer.

13. The system of any one of the claims 9 to 12, wherein
the blueprint engine is configured to specify, in the blueprint, that the second instance of the resource is to be provisioned by sharing the first instance of the second cloud resource.

14. The system of any one of the claims 9 to 13, wherein
the resource is cloud agnostic.
